# EUROPEAN PATENT APPLICATION

(11) **EP 2 889 180 A2**
(43) Date of publication of application: **01.07.2015**
(21) Application number: 14200558.6
(22) Date of filing: 30.12.2014
(51) Int. Cl.: B60P 7/08

(54) **Edge protector**

(30) Priority: 30.12.2013 NL 2012034
(71) Applicant: SYMA Logistic Tools B.V., 1636 XA Schermerhorn (NL)
(72) Inventor: Wassenaar, Sylvester, 1623 RK Hoorn (NL)
(74) Representative: EP&C

(57) **Abstract**

An edge protector for protecting an edge of a cargo secured by an elongate flexible fastener, such as a belt, which edge protector comprises; a body made of a stiff material, which body comprises a first body section with a first contact surface to be placed in contact with the cargo, and a second body section with a second contact surface to be placed in contact with the cargo, wherein the second contact surface extends transverse relative to the first contact surface, and a receiving member provided on the first body section and configured to in use receive a positioning member of a positioning unit.

## Description

### FIELD OF THE INVENTION

The invention relates to an edge protector for protecting an edge of a cargo secured by an elongate flexible fastener, such as a belt. In use, these edge protectors are often placed between the flexible fastener and an edge at the top side of the cargo in order to ensure that the edge is not damaged when the flexible fastener is fastened to secure the cargo for transport.

### BACKGROUND OF THE INVENTION

The invention is based on the insight that it is difficult to handle the edge protectors in order to place them in position. In general, the user takes one edge protector in his/her hands, and climbs to an elevated position to place the edge protectors. The user may for example use a ladder or climbs via the cargo and/or the transport vehicle to the elevated position. This operation is relatively time consuming. In addition to this, this climbing operation is dangerous because there is a relatively high risk that the user falls, which can lead to very serious injuries.

There are grippers known with which the edge protector can be grip and lifted to top side. But these grippers do not hold the edge protector in a secure manner and/or have a very complicated construction and/or are difficult to use for removing the edge protector from the top side.

The invention is based on the insight that there is a need in the field of the art for edge protectors which can be placed in position in a faster manner. In addition, there is a need for edge protectors which can be placed in position in a safer manner for the user. There is also a need for edge protectors which can be placed in position in a simple manner.

### SUMMARY OF THE INVENTION

The invention has the objective to provide an improved or alternative edge protector for protecting an edge of a cargo secured by an elongate flexible fastener.

The edge protector according to the invention comprises a body made of a stiff material, which body comprises a first body section with a first contact surface to be placed in contact with the cargo, and a second body section with a second contact surface to be placed in contact with the cargo, which second contact surface extends transverse relative to the first contact surface, and a receiving member provided on the first body section and configured to in use receive a positioning member of a positioning unit. This allows the edge protector to be placed on the top side of the cargo with the use of an positioning unit having an positioning member which can be placed in the receiving member of the edge protector. With this edge protector, it is not required that the user first is positioned in an elevated position, because the edge protector can be lifted with the positioning unit to a higher position. This allows the user to position the edge protector in a faster manner on the top side of the cargo when it needs to be secured. This also allows the user the remove the edge protector in faster manner when the secured cargo is unfastened. It furthermore allows the user to perform both operations in a safer manner, because the user does not need to climb to an elevated position. This reduces the risks of getting injured by falling. The edge protector also has a simple construction. The receiving member provided on the edge protector allows that the edge protector is placed in position in a simple manner.

In an embodiment of the edge protector according to the invention, the receiving member is configured to allow a lifting of the edge protector with the positioning unit.

In an embodiment of the edge protector according to the invention, the receiving member comprises side walls surrounding a longitudinal member axis to form an inner space extending along the longitudinal member axis. The side walls may completely surround the longitudinal member axis or may partly surround the longitudinal member axis.

In an embodiment of the edge protector according to the invention, the side walls are configured to allow a lifting of the edge protector by applying a force on the side walls in the inner space with the positioning member

In an embodiment of the edge protector according to the invention, the inner space has an elongate form extending along the longitudinal member axis.

In an embodiment of the edge protector according to the invention, the side walls of the receiving member are made of a stiff material, such as the same stiff material as the body is made of.

In an embodiment of the edge protector according to the invention, the edge protector comprises an inner side and an outer side, the first contact surface and the second contact surface are located at the inner side, and the receiving member is located at the outer side.

In an embodiment of the edge protector according to the invention, two guiding members are provided at the outer side, which guiding members are located at a distance from each other to define a guiding area where in use the flexible fastener is positioned, and the receiving member is located in a position outside the guiding area.

In an embodiment of the edge protector according to the invention, the first body section and the second body section are interconnected via an intermediate section, and the first contact surface and the second contact surface are located at a distance from each other at the intermediate section.

In an embodiment of the edge protector according to the invention, the first contact surface and the second contact surface are located at a distance from each other such that an edge space is formed to in use receive the edge of the cargo.

In an embodiment of the edge protector according to the invention, the inner space comprises a first space end and a second space end, an entry opening is provided at the first space end, and the first space end is located at a larger distance from the second body section than the second space end.

In an embodiment of the edge protector according to the invention, the entry opening provides an access to the inner space of the receiving member.

In an embodiment of the edge protector according to the invention, a first virtual plane extending through the first contact surface and a second virtual plane extending through the second contact surface intersect at an intersection line, and the longitudinal member axis extends transverse to the intersection line.

In an embodiment of the edge protector according to the invention, a first virtual plane extending through the first contact surface and a second virtual plane extending through the second contact surface intersect at an intersection line, and the longitudinal member axis extends perpendicular to the intersection line.

In an embodiment of the edge protector according to the invention, the inner space of the receiving member has a length when measured along the longitudinal member axis, the entry opening has a width and a height when measured perpendicular to the longitudinal member axis of the receiving member and each of said width and height is smaller than the length of the inner space.

In an embodiment of the edge protector according to the invention, the inner space of the receiving member has a length when measured along the longitudinal member axis, the entry opening has a width and a height when measured perpendicular to the longitudinal member axis of the receiving member and each of said width and height is at least three times smaller than the length of the inner space.

In an embodiment of the edge protector according to the invention, the first body section extends from the intermediate section until a first section end, and the entry opening is located near or at the first section end.

In an embodiment of the edge protector according to the invention, the second body section extends from the intermediate section until a second section end.

In an embodiment of the edge protector according to the invention, a holder member is provided on the receiving member.

In an embodiment of the edge protector according to the invention, the holder member has an elongate form extending along a longitudinal holder axis.

In an embodiment of the edge protector according to the invention, the holder member is configured to be positioned in a further receiving member of a further edge protector stacked on the edge protector.

In an embodiment of the edge protector according to the invention, the holder member is configured to be positioned in a further receiving member of a further edge protector stacked on the edge protector such that a further first contact surface of the further edge protector extends parallel to the first contact surface of the edge protector and a further second contact surface of the further edge protector extends parallel to the second contact surface of the edge protector.

In an embodiment of the edge protector according to the invention, the holder member comprises a first holder end which is connected to the receiving member and a holder body extending along the longitudinal holder axis from the first holder end until it ends at a second holder end, the elongate holder body and second holder end are not connected to the receiving member, and the first holder end is located at a larger distance from the second body section than the second holder end.

In an embodiment of the edge protector according to the invention, the longitudinal holder axis of the holder member extends in substantially the same direction as the longitudinal member axis of the receiving member.

In an embodiment of the edge protector according to the invention, the first contact surface and the second contact surface are flat surfaces.

In an embodiment of the edge protector according to the invention, the first contact surface and second contact surface extend under an angle of about 90° relative to each other.

In an embodiment of the edge protector according to the invention, the first body section and the second body section are interconnected via an intermediate section, and the intermediate section comprises a hinge to pivot the first body section and the second body section relative to each other.

In an embodiment of the edge protector according to the invention, the hinge is configured to allow adjustment of the angle α between the first contact surface and the second contact surface.

In an embodiment of the edge protector according to the invention, the hinge is configured to allow adjustment of the angle α between the first contact surface and the second contact surface within a range of 90° - 180°.

In an embodiment of the edge protector according to the invention, the hinge comprises blocking means to block adjustment of the angle α between the first contact surface and the second contact surface beyond the range of 90° - 180°.

In an embodiment of the edge protector according to the invention, the hinge comprises a pivot axis extending substantially parallel to the first contact surface and the second contact surface.

The features of one or more of the above defines embodiments of the edge protector can be combined.

The invention further relates to a kit of parts comprising an edge protector according to the invention and a positioning unit comprising an elongate stick with a positioning member located at a stick end of the stick, which positioning member fits in the receiving member of the edge protector.

In an embodiment of the kit of parts according to the invention, the positioning unit is constructed to lift the edge protector when the positioning member is located in the receiving member of the edge protector.

In an embodiment of the kit of parts according to the invention, the positioning member has an elongate form.

In an embodiment of the kit of parts according to the invention, the elongate stick is an extendable stick. More specifically, the stick can be an telescopically extendable stick. This allows the user to place the edge protector at higher locations and facilitates the storing of the stick when not in use.

In an embodiment of the kit of parts according to the invention, the positioning member is connected to the stick by a pivot connector to position the positioning member in different orientations relative to the stick.

In an embodiment of the kit of parts according to the invention, the positioning unit comprises an elongate removing member for removing planks. Carriers of trucks often have horizontally extending planks positioned at different heights in order to keep the cargo on the carrier. The removing member allows that the positioning unit is used to remove the planks and to place the planks back in position. This can be done before and after the loading or unloading of the cargo and the placing or removal of the edge protector.

In an embodiment of the kit of parts according to the invention, the removing member extends at a distance from the positioning member such that a plank can be received between the removing member and the positioning member.

The features of one or more of the above defines embodiments of the kit of part can be combined.

The invention further relates to an assembly of an edge protector according to the invention and a further edge protector according to the invention, wherein the further edge protector is stacked on the edge protector, and the holder member of the edge protector is positioned in the further receiving member of the further edge protector. The holder member of the edge protector holds the further edge protector in its position when stacked on the edge protector. This way a user can carry several edge protectors in a simple manner. It also ensures that stacked edge protectors stay in position relative to each other when for example transported while being positioned on a carrier of a truck.

In an embodiment of the assembly according to the invention, the further first contact surface of the further edge protector extends parallel to the first contact surface of the edge protector, and the further second contact surface of the further edge protector extends parallel to the second contact surface of the edge protector.

The invention further relates to a method for securing a cargo with an elongate flexible fastener, such as a belt, and a kit of parts according to the invention, said method comprising the steps of:
- positioning the positioning member of the positioning unit in the receiving member of the edge protector,
- lifting the edge protector with the positioning unit to a top side of the cargo,
- placing the edge protector between the flexible fastener and the cargo, such that the first contact surface is in contact with the cargo and the second contact surface is in contact with the top side of the cargo, and
- removing the positioning member out of the receiving member, lowering the positioning member and fastening the flexible fastener to secure the cargo, while the edge protector remains positioned between the flexible fastener and the cargo.

The invention further relates to a method for unfasten a cargo secured with an elongate flexible fastener, such as a belt, and a kit of parts according to the invention, said method comprising the steps of:
- unfastening the flexible fastener which secures the cargo,
- positioning the positioning member of the positioning unit in the receiving member of the edge protector, and
- lowering the edge protector with the positioning unit from the top side of the cargo.

The invention further relates to a method for stacking an edge protector according to the invention and a further edge protector according to the invention, said method comprises positioning the further edge protector on the edge protector such that the holder member of the edge protector is positioned in the further receiving member of the further edge protector.

In an embodiment of the method for stacking according to the invention, the method comprises positioning the further edge protector on the edge protector such that the further first contact surface of the further edge protector extends parallel to the first contact surface of the edge protector, and the further second contact surface of the further edge protector extends parallel to the second contact surface of the edge protector.

### BRIEF DESCRIPTION OF THE DRAWINGS

Embodiments of the edge protector, kit of parts, assembly, and methods according to the invention will be described by way of example only, with reference to the accompanying schematic drawings in which corresponding reference symbols indicate corresponding parts, and in which:
Figure 1 schematically shows a view in perspective of an embodiment of the edge protector according to the invention,
the Figures 2 and 3 schematically show side views of the edge protector of figure 1,
the Figures 4 and 5 schematically show side views of an embodiment of an assembly according to the invention,
Figure 6 schematically shows a view in perspective of an embodiment of a positioning unit of a kit of parts according to the invention,
Figure 7 schematically shows an enlarged view of the positioning member of the positioning unit of figure 6,
Figure 8 schematically shows an alternative embodiment of the positioning unit of figure 7,
Figure 9 schematically shows a further alternative embodiment of the positioning unit of figure 7,
Figure 10 schematically shows a side view of the kit of parts as discussed in relation with figure 6,
the figures 11-15 schematically show side views of an embodiment of methods according to the invention,
the figures 16-20 schematically show different views of a second embodiment of the edge protector according to the invention,
the figures 21-29 schematically show different views of a third embodiment of the edge protector according to the invention, and
the figures 30-32 schematically show a further alternative embodiment of the positioning member of the positioning unit according to the invention.

### DETAILED DESCRIPTION OF THE DRAWINGS

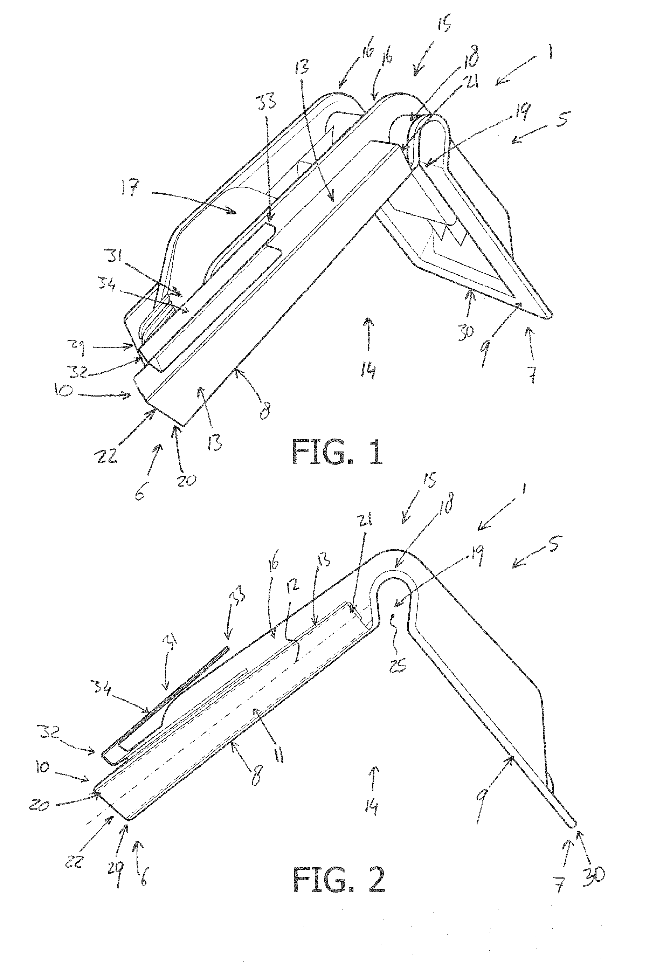

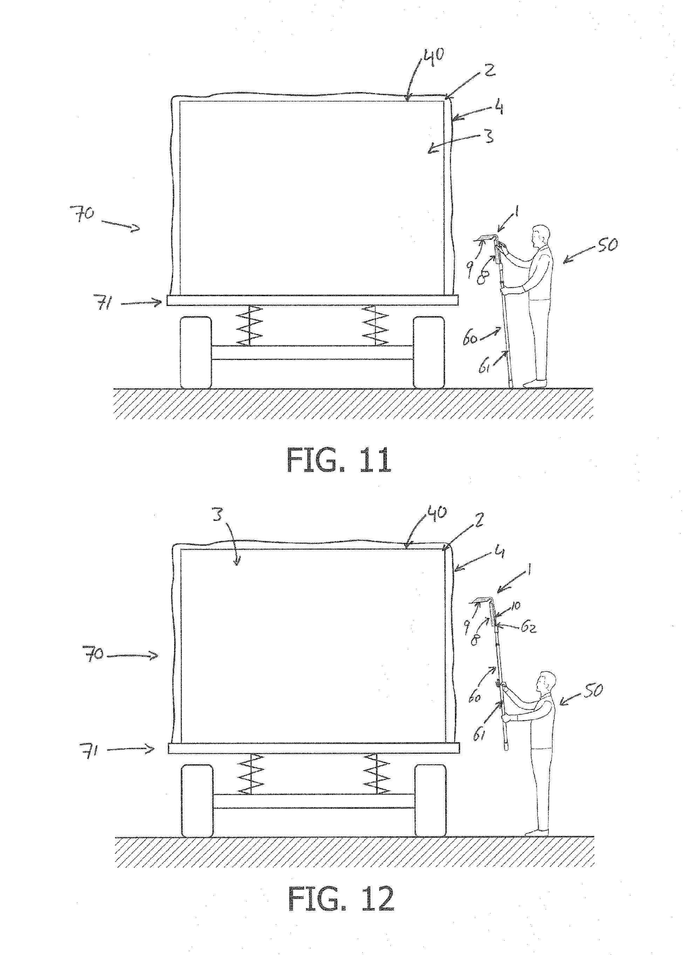

The figures 1-3 show an embodiment of the edge protector 1 according to the invention. The edge protector 1 is configured to protect an edge 2 of a cargo 3 secured by an elongate flexible fastener 4, such as a belt, chain or the like (see also the figures 11-15). The edge protector 1 comprises a body 5 made of a stiff material. The body 5 comprises a first body section 6 with a first contact surface 8 to be placed in contact with the cargo 3, and a second body section 7 with a second contact surface 9 to be placed in contact with the cargo 3. The second contact surface 9 extends transverse relative to the first contact surface 8. The edge protector 1 further comprises a receiving member 10 provided on the first body section 6 and configured to in use receive a positioning member 62 of a positioning unit 60. The receiving member 10 is configured to allow a lifting of the edge protector 1 with the positioning unit 60. The receiving member 10 comprises side walls 13 surrounding a longitudinal member axis 12 to form an inner space 11 extending along the longitudinal member axis 12. The side walls 13 are configured to allow a lifting of the edge protector 1 by applying a force on the side walls 13 in the inner space 11 with the positioning member 62.

This allows the edge protector 1 to be placed on the top side 40 of the cargo 3 with the use of a positioning unit 60 having an positioning member 62 which can be placed in the receiving member 10 of the edge protector 1. With this edge protector 1, it is not required that the user 50 first is positioned in an elevated position, because the edge protector 1 can be lifted with the positioning unit 60 to a higher position. This allows the user 50 to position the edge protector 1 in a faster manner on the top side 40 of the cargo 3 when it needs to be secured. This also allows the user 50 the remove the edge protector 1 in faster manner when the secured cargo 3 is unfastened. It furthermore allows the user 50 to perform both operations in a safer manner, because the user 50 does not need to climb to an elevated position. This reduces the risks of getting injured by falling. The edge protector 1 also has a simple construction. The receiving member 10 provided on the edge protector 1 allows that the edge protector 1 is placed in position in a simple manner.

The side walls 13 of the receiving member 10 are made of a stiff material, such as the same stiff material where the body 5 is made of. The receiving member 10 can be made integrally with the body 5, such as by injection moulding. In another example, the receiving member 10 can be a separate item which is connected to the first body section 6. The receiving member 10 can in that case be connected in a releasable manner to the first body section 6. The receiving member 10 can also be made of a different material than the body 5 of the edge protector 1.

The edge protector 1 comprises an inner side 14 and an outer side 15. The first contact surface 8 and the second contact surface 9 are located at the inner side 14, and the receiving member 10 is located at the outer side 15. Two guiding members 16 are provided at the outer side 15, which guiding members 16 are located at a distance from each other to define a guiding area 17 where in use the flexible fastener 4 is positioned. The receiving member 10 is located in a position outside the guiding area 17.

The first body section 6 and the second body section 7 are interconnected via an intermediate section 18. The first contact surface 8 and the second contact surface 9 are located at a distance from each other at the intermediate section 18. The first contact surface 8 and the second contact surface 9 are located at a distance from each other such that an edge space 19 is formed to in use receive the edge 2 of the cargo 3.

The inner space 11 comprises a first space end 20 and a second space end 21. An entry opening 22 is provided at the first space end 20. The first space end 20 is located at a larger distance from the second body section 7 than the second space end 21. The entry opening 22 provides an access to the inner space 11 of the receiving member 10.

A first virtual plane extending through the first contact surface 8 and a second virtual plane extending through the second contact surface 9 intersect at an intersection line 25. The longitudinal member axis 12 extends perpendicular to the intersection line 25. In other embodiments, the longitudinal member axis 12 extends transverse to the intersection line 25.

The inner space 11 of the receiving member 10 has a length L when measured along the longitudinal member axis 12. The entry opening has a width B and a height H when measured perpendicular to the longitudinal member axis 12 of the receiving member 10. Each of said width B and height H is at least three times smaller than the length L of the inner space 11. The first body section 6 extends from the intermediate section 18 until a first section end 29. The entry opening 22 is located near or at the first section end 29. The second body section 7 extends from the intermediate section 18 until a second section end 30.

A holder member 31 is provided on the receiving member 10. The holder member 31 has an elongate form extending along a longitudinal holder axis 35. The holder member 31 is configured to be positioned in the further receiving member 10' of a further edge protector 1' stacked on the edge protector 1. The further first contact surface 8' of the further edge protector 1' extends parallel to the first contact surface 8 of the edge protector 1 and the further second contact surface 9' of the further edge protector 1' extends parallel to the second contact surface 9 of the edge protector 1.

The holder member 31 comprises a first holder end 32 which is connected to the receiving member 10 and a holder body 34 extending along the longitudinal holder axis 35 from the first holder end 32 until it ends at a second holder end 33. The elongate holder body 34 and second holder end 33 are not connected to the receiving member 10. The first holder end 32 is located at a larger distance from the second body section 7 than the second holder end 33. The longitudinal holder axis 35 of the holder member 31 extends in substantially the same direction as the longitudinal member axis 12 of the receiving member 10. The holder member 31 can be made as an integral part of the receiving member 10, such as by injection moulding.

The first contact surface 8 and the second contact surface 9 are flat surfaces. The first contact surface 8 and the second contact surface 9 extend under an angle of about 90° relative to each other.

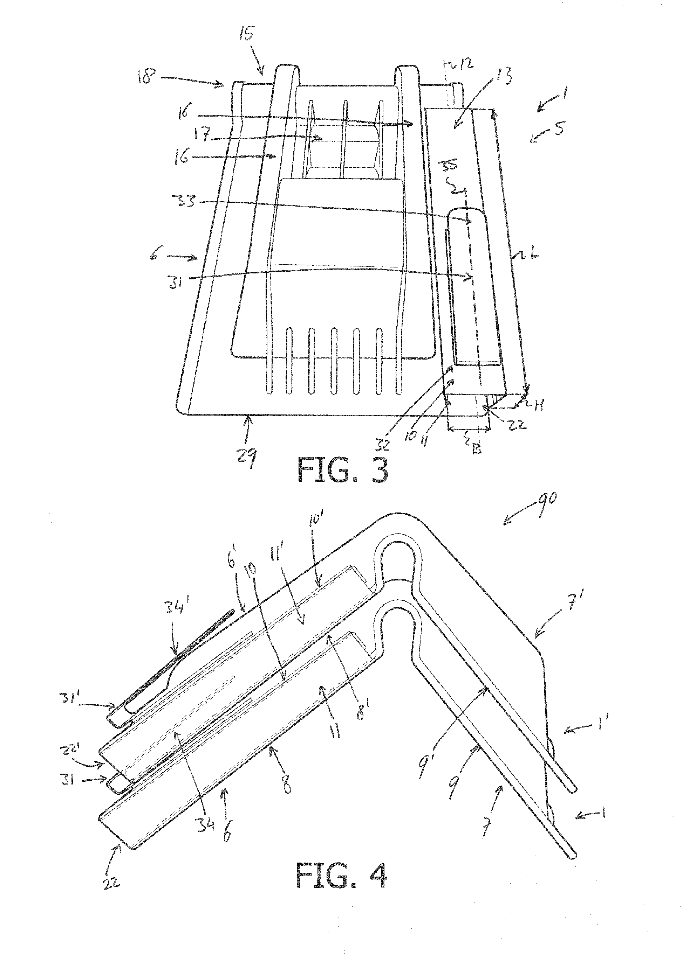

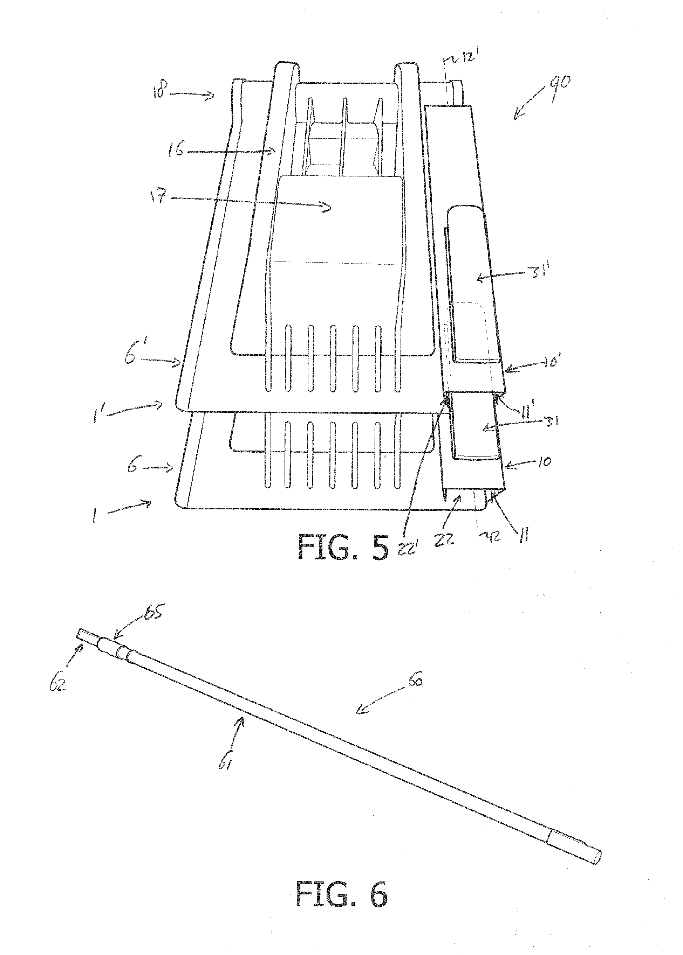

The figures 4 and 5 show an embodiment of the assembly 90 according to the invention. The assembly 90 comprises an edge protector 1 and a further edge protector 1', both according the figures 1-3. The further edge protector 1' is stacked on the edge protector 1, and the holder member 31 of the edge protector 1 is positioned in the further receiving member 10' of the further edge protector 1'. The further first contact surface 8' of the further edge protector 1' extends parallel to the first contact surface 8 of the edge protector 1, and the further second contact surface 9' of the further edge protector 1' extends parallel to the second contact surface 9 of the edge protector 1. The holder member 31 of the edge protector 1 holds the further edge protector 1' in its position when stacked on the edge protector 1. This way a user can carry several edge protectors 1 in a simple manner. It also ensures that stacked edge protectors 1 stay in position relative to each other when for example transported while being positioned on a carrier of a truck.

The figures 4 and 5 also show an embodiment of the method according to the invention for stacking an edge protector 1 and a further edge protector 1', both according to the figures 1-3. The method comprises positioning the further edge protector 1' on the edge protector 1 such that the holder member 31 of the edge protector 1 is positioned in the further receiving member 10' of the further edge protector 1'. The method further comprises positioning the further edge protector 1' on the edge protector 1 such that the further first contact surface 8' of the further edge protector 1' extends parallel to the first contact surface 8 of the edge protector 1, and the further second contact surface 9' of the further edge protector 1' extends parallel to the second contact surface 9 of the edge protector 1.

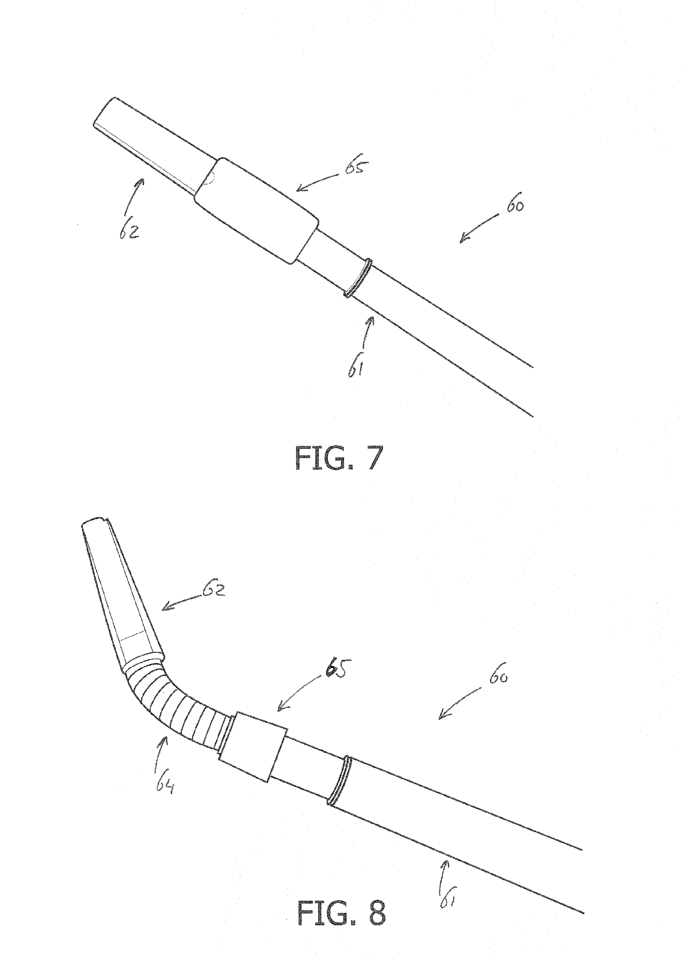

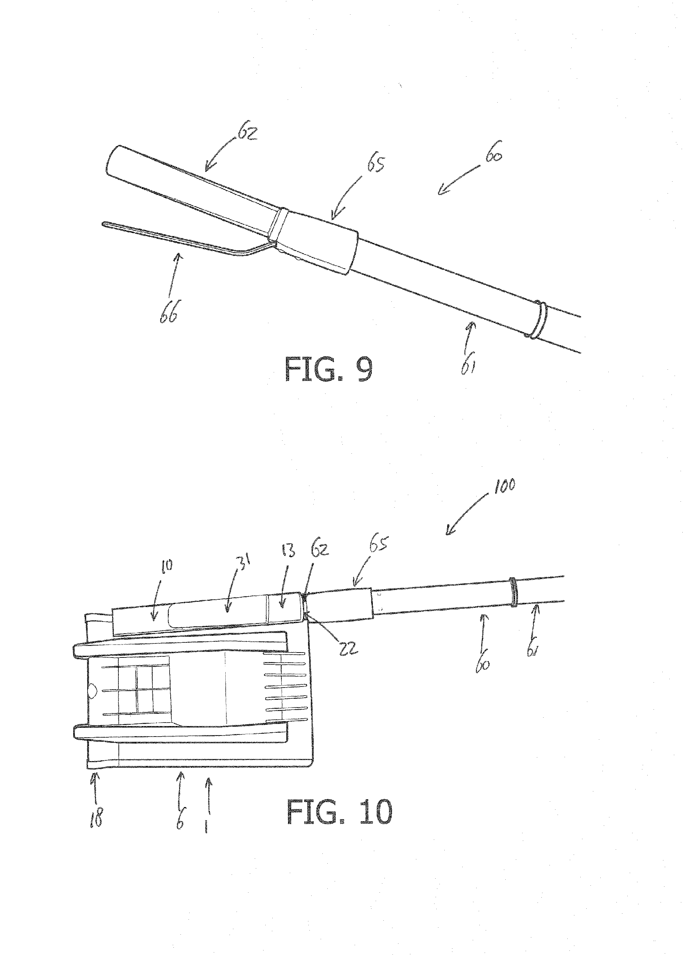

Figure 10 show an embodiment of kit of parts 100 according to the invention. The kit of parts 100 comprises the edge protector 1 of the figures 1-3 and the positioning unit 60 of the figures 6 and 7. The positioning unit 60 comprises an elongate stick 61 with an positioning member 62 located at a stick end 65 of the stick 61, which positioning member 62 fits in the receiving member 10 of the edge protector 1. The positioning unit 60 is constructed to lift the edge protector 1 when the positioning member 60 is located in the receiving member 10 of the edge protector 1. The positioning member 62 has an elongate form. The elongate stick 61 is an extendable stick. More specifically, the stick 61 is an telescopically extendable stick.

Figure 8 shows an alternative embodiment of the positioning unit 60 of figure 7. The positioning member 62 is connected to the stick 61 by a pivot connector 64 to position the positioning member 62 in different orientations relative to the stick 61.

Figure 9 shows a further alternative embodiment of the positioning unit 60 of figure 7. The positioning unit 60 comprises an elongate removing member 66 for removing planks. The removing member 66 extends at a distance from the positioning member 62 such that a plank can be received between the removing member 66 and the positioning member 62. Carriers of trucks often have horizontally extending planks positioned at different heights in order to keep the cargo 3 on the carrier. The removing member 66 allows that the positioning unit 60 is used to remove the planks and to place them back in position.

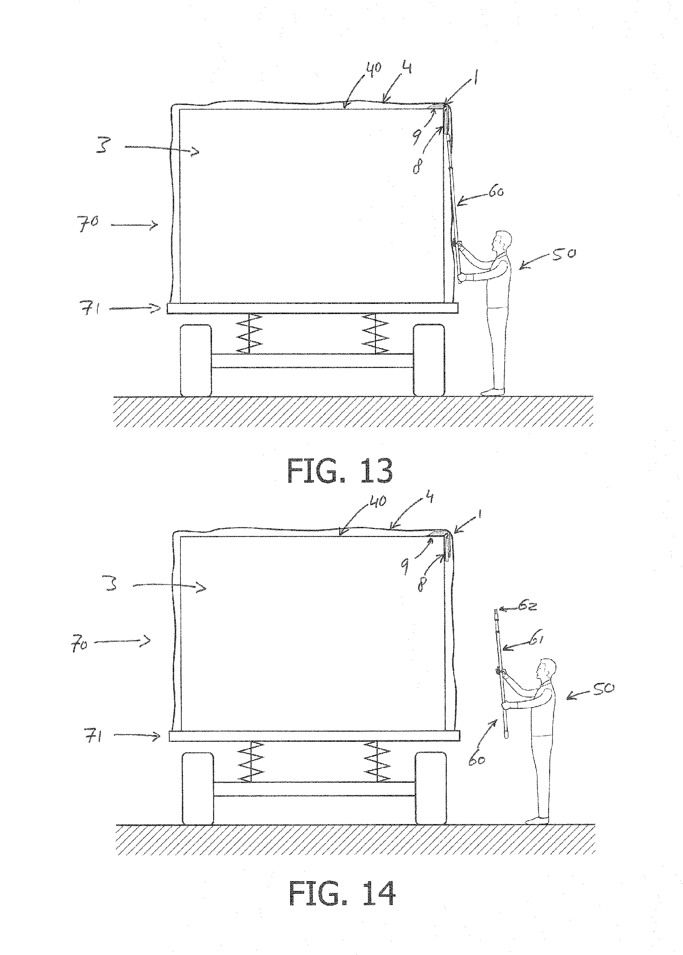

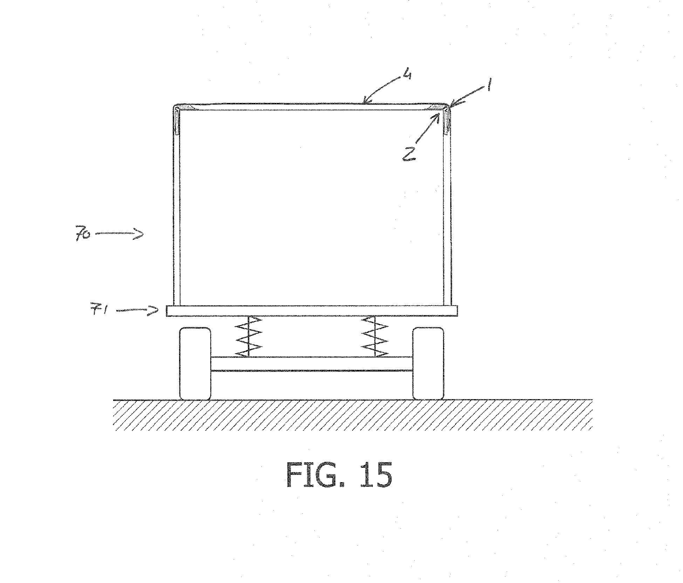

The figures 11-15 show an embodiment of a method according to the invention. A cargo 3 is located on a carrier 71 of a truck 70. The method is for securing the cargo 3 with an elongate flexible fastener 4, such as a belt, chain or the like, and the kit of parts 100 of figure 10. The method comprising the steps of:
- positioning the positioning member 62 of the positioning unit 60 in the receiving member 10 of the edge protector 1 (see figure 11),
- lifting the edge protector 1 with the positioning unit 60 to a top side 40 of the cargo 3 (see figure 12),
- placing the edge protector 1 between the flexible fastener 4 and the cargo 3, such that the first contact surface 8 is in contact with the cargo 3 and the second contact surface 9 is in contact with the top side 40 of the cargo 3 (see figure 13), and
- removing the positioning member 62 out of the receiving member 10, lowering the positioning member 62 and fastening the flexible fastener 4 to secure the cargo 3, while the edge protector 1 remains positioned between the flexible fastener 4 and the cargo 3 (see figures 14 and 15).

As will be clear to the person skilled in the art, the positioning unit 60 can also be used to remove the edge protector 1. The method for unfasten the cargo 3 secured with the elongate flexible fastener 4 and the kit of parts 100 of figure 10 comprising the steps of:
- unfastening the flexible fastener 4 which secures the cargo 3,
- positioning the positioning member 62 of the positioning unit 60 in the receiving member 10 of the edge protector 1, and
- lowering the edge protector 1 with the positioning unit 60 from the top side 40 of the cargo 3.

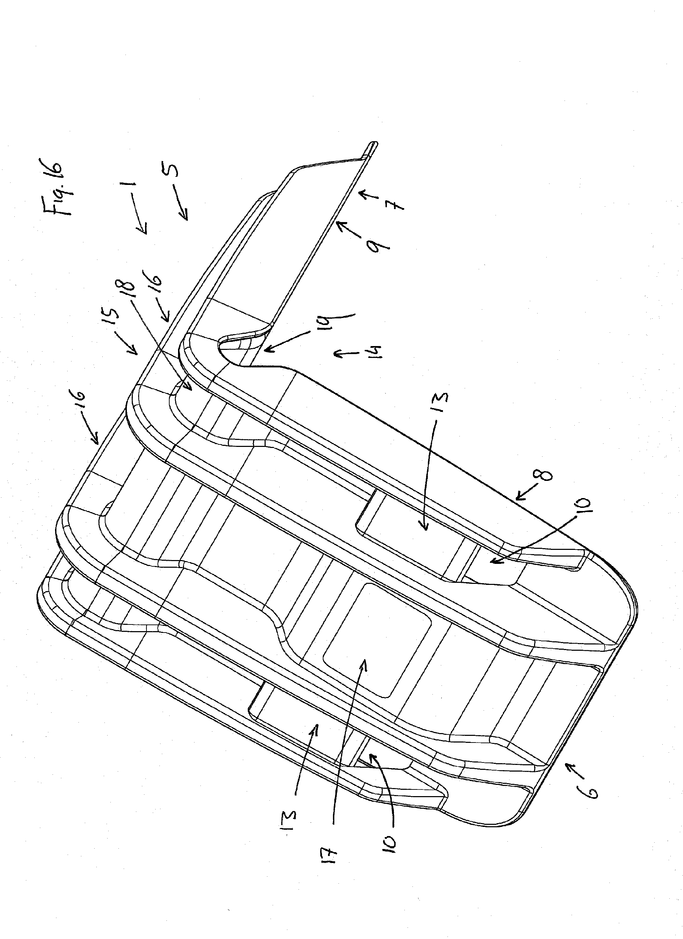

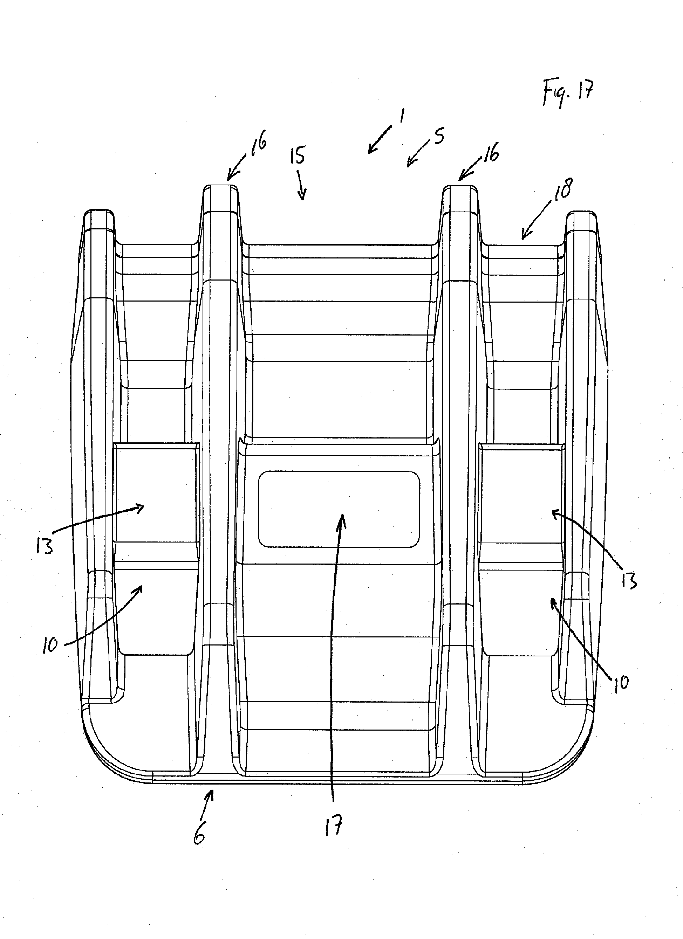

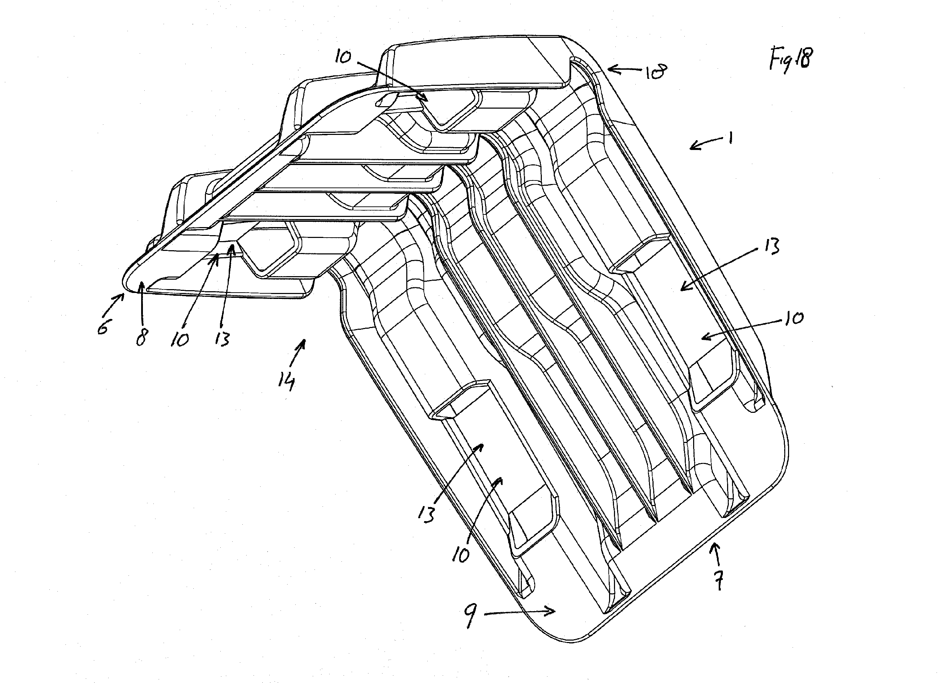

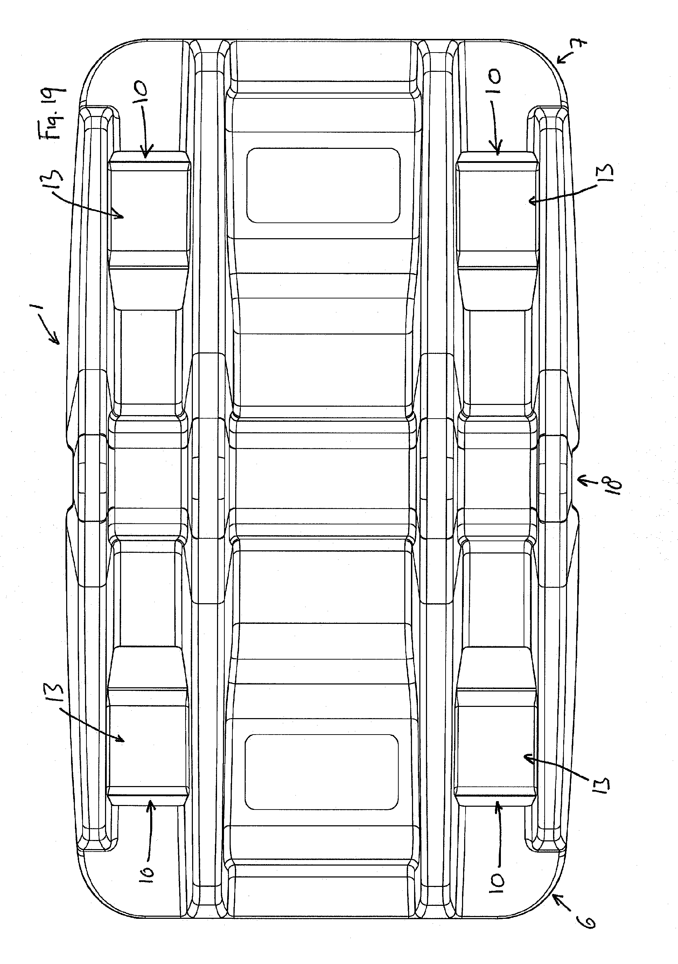

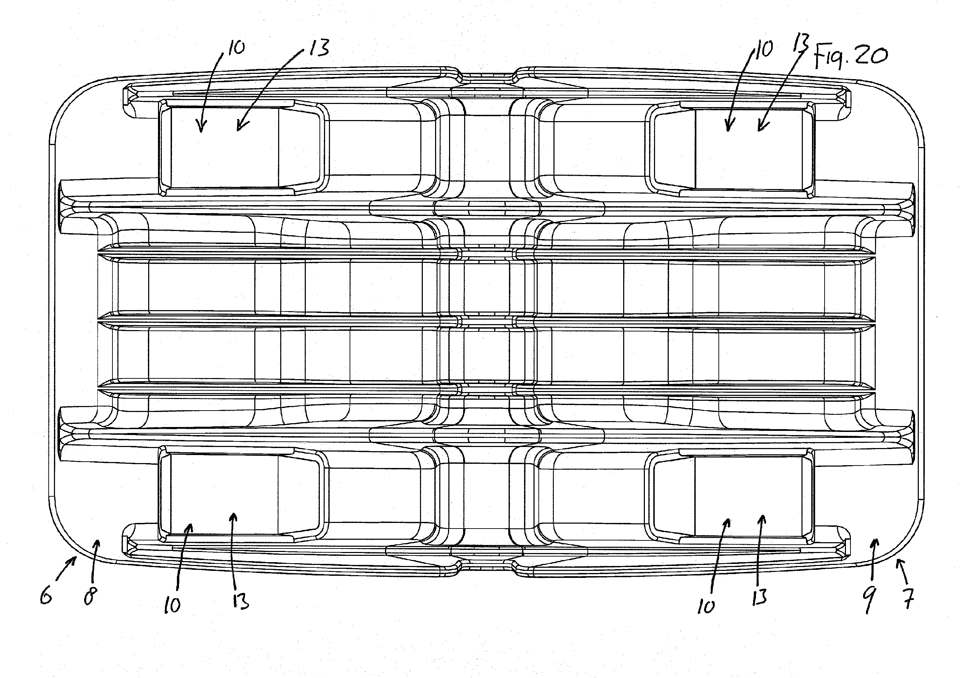

The figures 16-20 schematically show different views of a second embodiment of the edge protector according to the invention. Figure 16 shows a view in perspective of the edge protector 1. Figure 17 shows a front view of the edge protector 1. Figure 18 shows a further view in perspective of the edge protector 1. Figure 19 shows a top view of the edge protector 1. Figure 20 shows a bottom view of the edge protector 1.

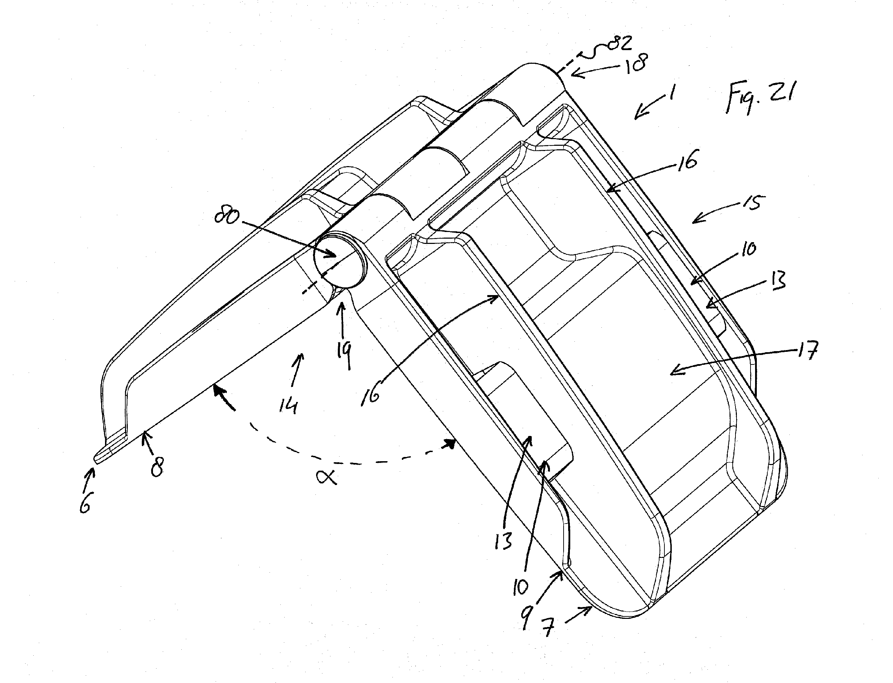

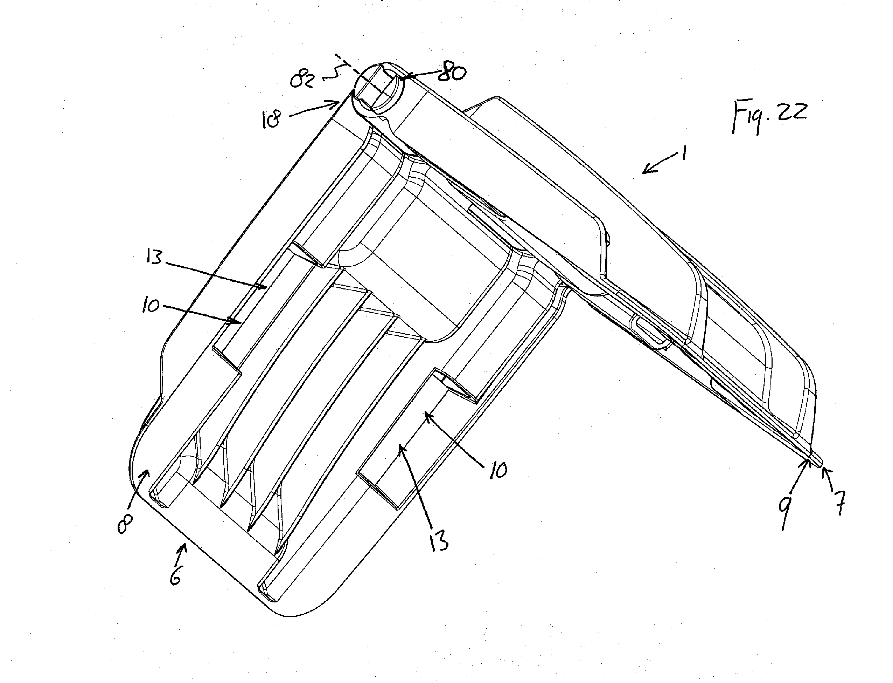

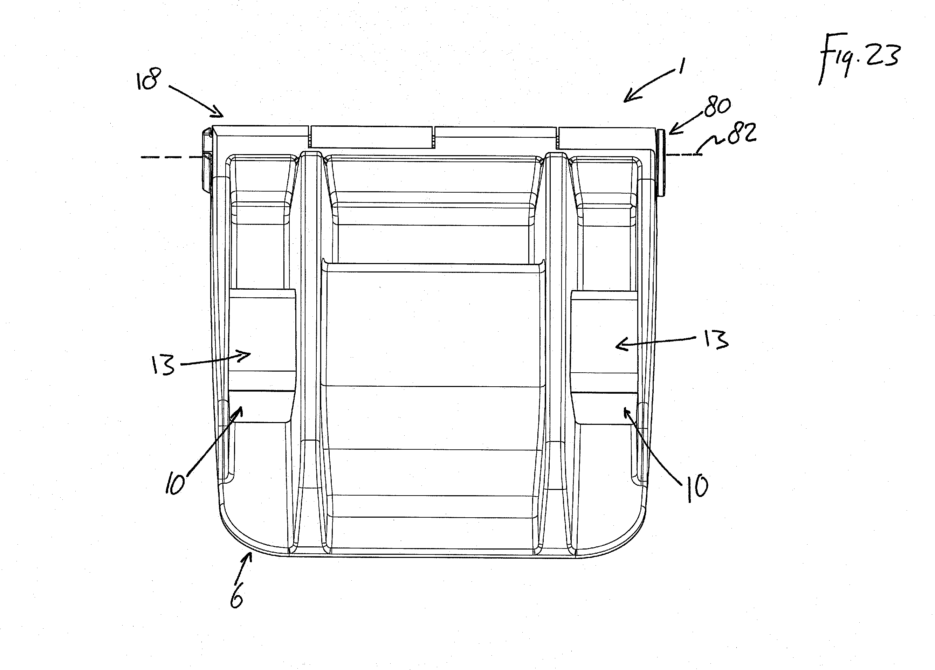

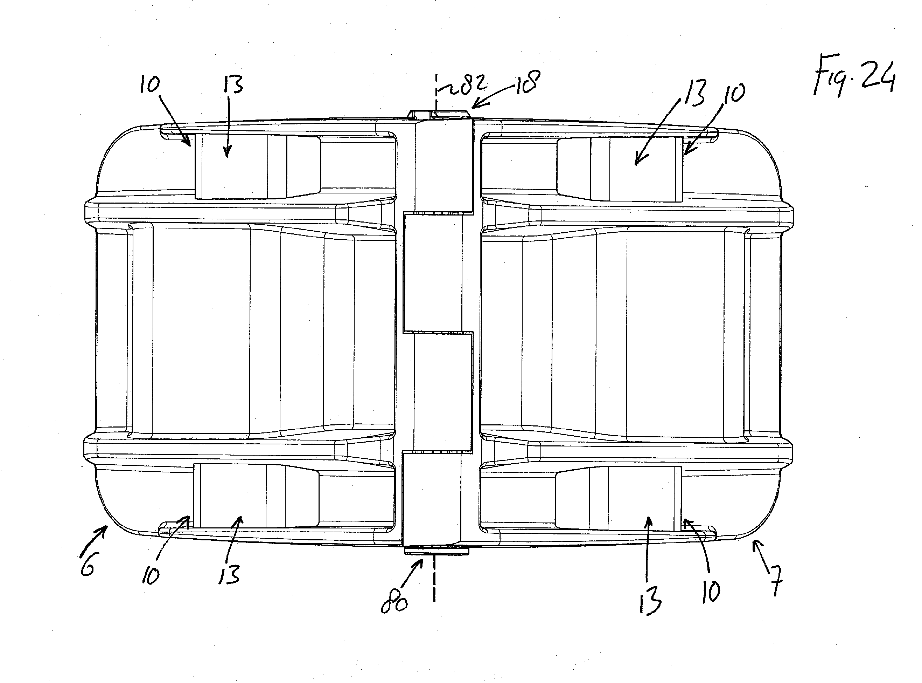

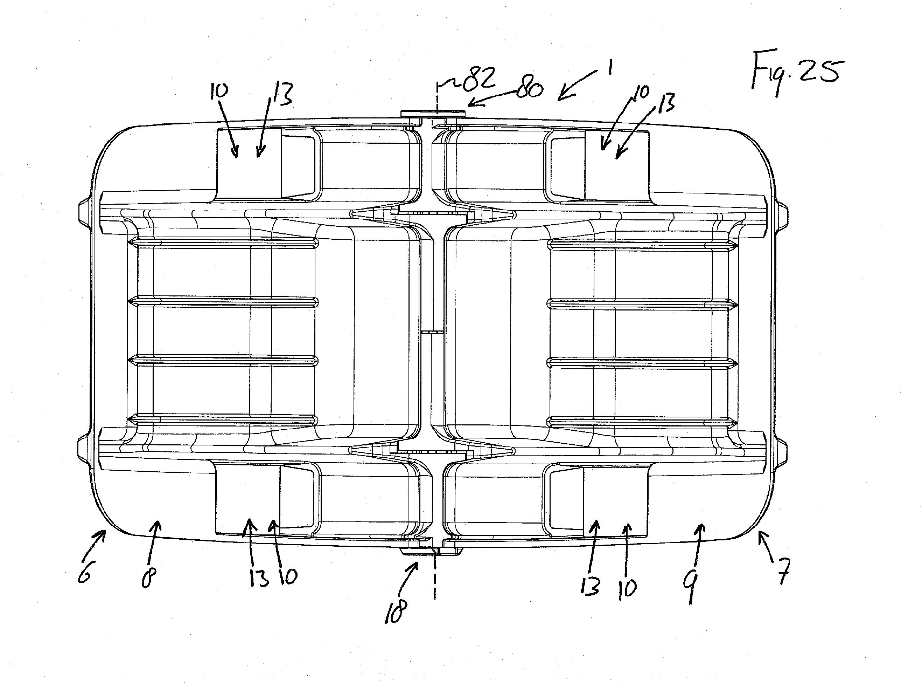

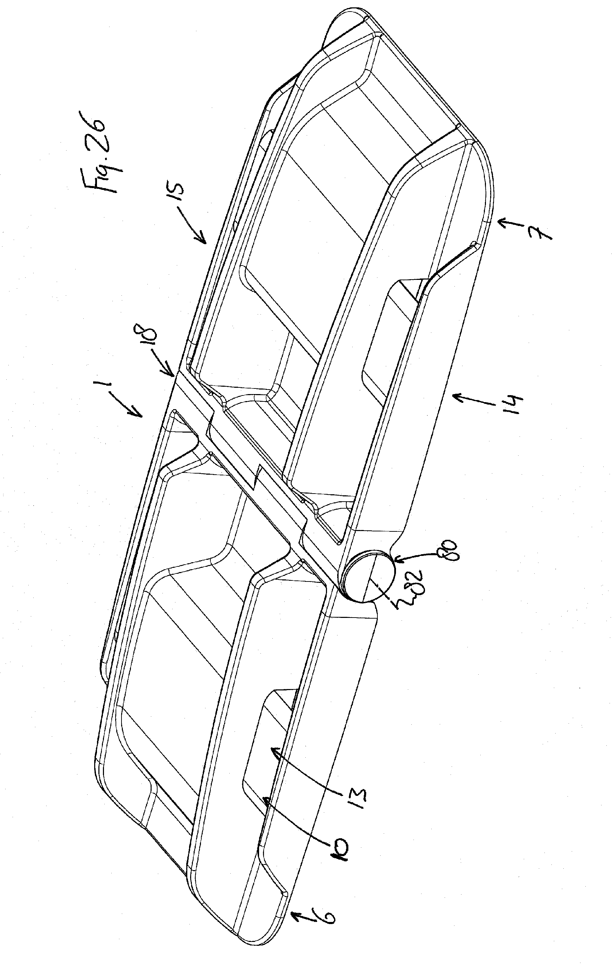

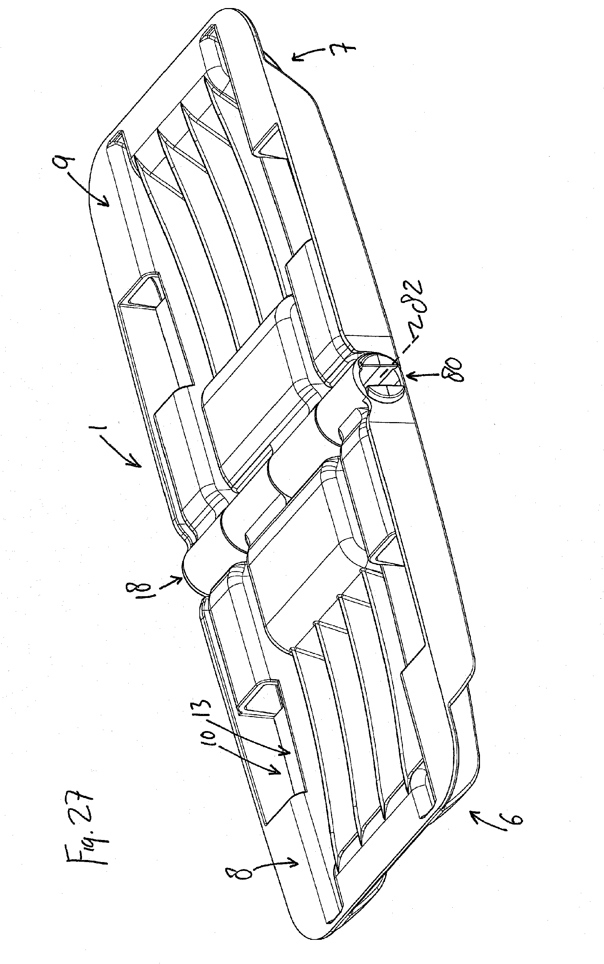

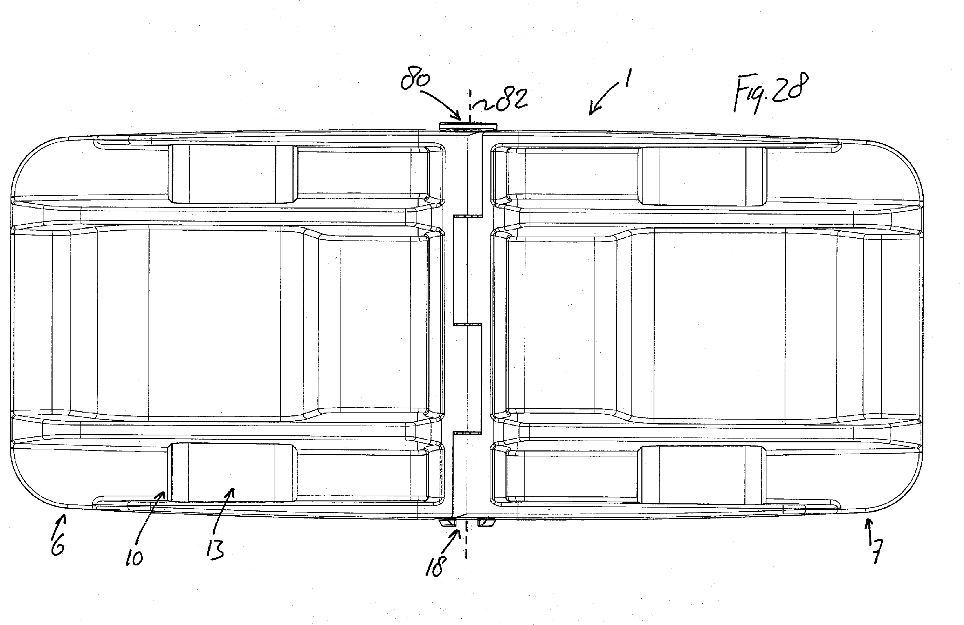

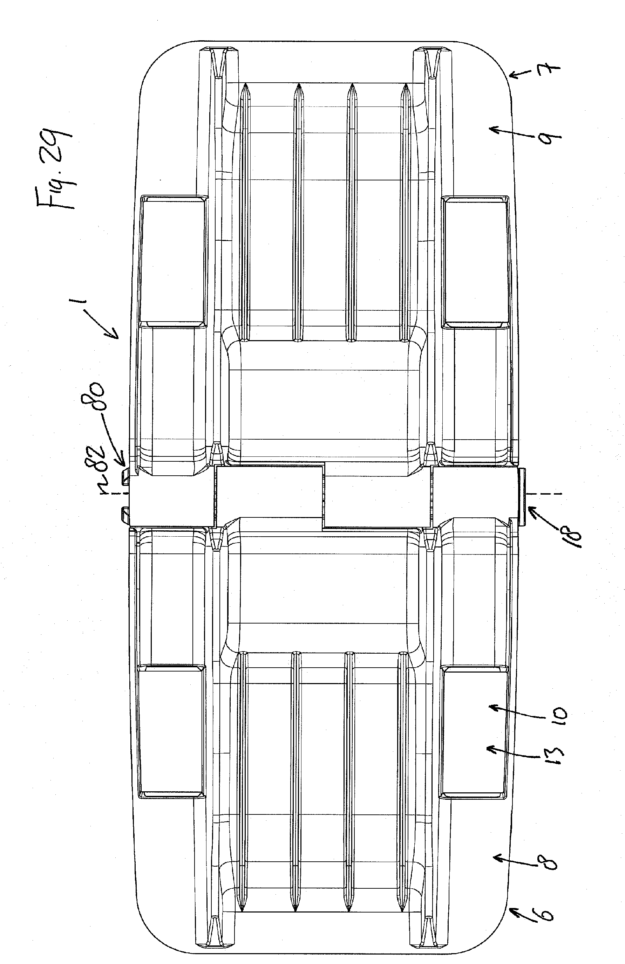

The figures 21-29 schematically show different views of a third embodiment of the edge protector according to the invention. Figure 21 shows a view in perspective of the edge protector 1. The intermediate section comprises a hinge 80 to pivot the first body section 6 and the second body section 7 relative to each other. The hinge 80 is configured to allow adjustment of the angle α between the first contact surface 8 and the second contact surface 9. The hinge 80 is configured to allow adjustment of the angle α between the first contact surface 8 and the second contact surface 9 within a range of 90° - 180°. The hinge comprises blocking means to block adjustment of the angle α between the first contact surface 8 and the second contact surface 9 beyond the range of 90° - 180°. The hinge 80 comprises a pivot axis 82 extending substantially parallel to the first contact surface 8 and the second contact surface 9. Figure 22 shows a further view in perspective of the edge protector 1. Figure 23 shows a front view of the edge protector 1. Figure 24 shows a top view of the edge protector 1. Figure 25 shows a bottom view of the edge protector 1. The figures 26 and 27 show further views in perspective of the edge protector 1. The figure 28 and 29 show a further top view and bottom view of the edge protector 1, respectively. In the figures 21-25, the angle α between the first contact surface 8 and the second contact surface 9 is about 90°. In the figures 26-29, the angle α between the first contact surface 8 and the second contact surface 9 is about 180°.

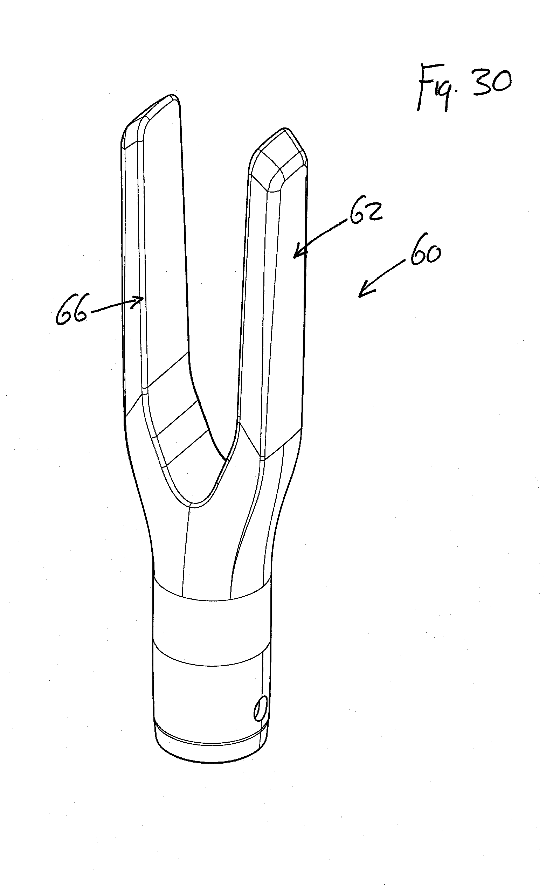

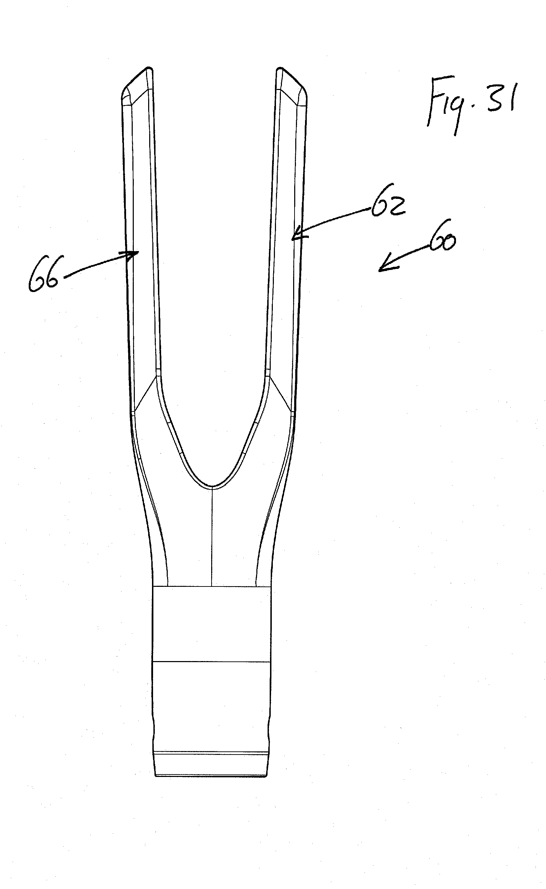

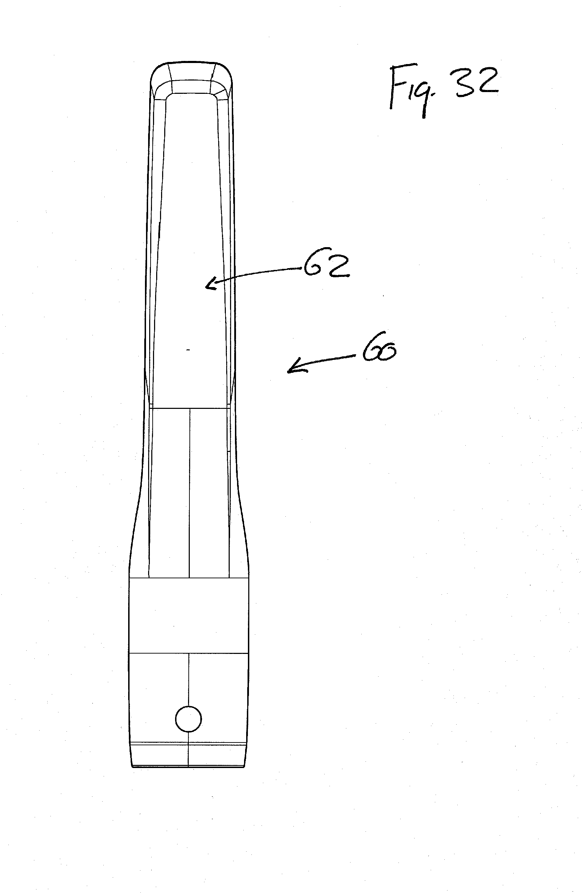

The figures 30-32 schematically show a further alternative embodiment of the positioning member 62 of the positioning unit 60 according to the invention. The positioning member 60 is in particular suitable for positioning the edge protectors 1 of the figures 16-29. Also a removing member 66 for removing planks is provided. The positioning member 62 and the removing member 66 have a similar form. This way the removing member 66 can also be used for positioning the edge protector 1. Figure 30 shows a view in perspective of the positioning member 62 with the removing member 66. Figure 31 shows a front view of the positioning member 62 with the removing member 66. Figure 32 shows a side view of the positioning member 62 with the removing member 66.

The following clauses form a further description of the edge protector, kit of parts and method according to the invention.
1. Edge protector for protecting an edge of a cargo secured by an elongate flexible fastener, such as a belt, which edge protector comprises;
   - a body made of a stiff material, which body comprises a first body section with a first contact surface to be placed in contact with the cargo, and a second body section with a second contact surface to be placed in contact with the cargo, wherein the second contact surface extends transverse relative to the first contact surface, and
   - a receiving member provided on the first body section and configured to in use receive a positioning member of a positioning unit.
2. Edge protector according to clause 1, wherein the receiving member is configured to allow a lifting of the edge protector with the positioning unit.
3. Edge protector according to clause 1 or 2, wherein the receiving member comprises side walls surrounding a longitudinal member axis to form an inner space extending along the longitudinal member axis.
4. Edge protector according to clause 3, wherein the side walls are configured to allow a lifting of the edge protector by applying a force on the side walls in the inner space with the positioning member.
5. Edge protector according to clause 3 or 4, wherein the side walls of the receiving member are made of a stiff material, such as the same stiff material as the body is made of.
6. Edge protector according to any one of the preceding clauses and in combination with clause 3, wherein the inner space has an elongate form extending along the longitudinal member axis.
7. Edge protector according to any one of the preceding clauses, wherein the edge protector comprises an inner side and an outer side, the first contact surface and the second contact surface are located at the inner side, and the receiving member is located at the outer side.
8. Edge protector according to any one of the preceding clauses, wherein two guiding members are provided at the outer side, which guiding members are located at a distance from each other to define a guiding area where in use the flexible fastener is positioned, and the receiving member is located in a position outside the guiding area.
9. Edge protector according to any one of the preceding clauses, wherein the first body section and the second body section are interconnected via an intermediate section, and the first contact surface and the second contact surface are located at a distance from each other at the intermediate section.
10. Edge protector according to any one of the preceding clauses, the first contact surface and the second contact surface are located at a distance from each other such that an edge space is formed to in use receive the edge of the cargo.
11. Edge protector according to any one of the preceding clauses and in combination with clause 3, wherein the inner space comprises a first space end and a second space end, an entry opening is provided at the first space end, and the first space end is located at a larger distance from the second body section than the second space end.
12. Edge protector according to clause 11, wherein the entry opening provides an access to the inner space of the receiving member.
13. Edge protector according to any one of the preceding clauses, wherein a first virtual plane extending through the first contact surface and a second virtual plane extending through the second contact surface intersect at an intersection line, and the longitudinal member axis extends transverse to the intersection line.
14. Edge protector according to clause 13, wherein a first virtual plane extending through the first contact surface and a second virtual plane extending through the second contact surface intersect at an intersection line, and the longitudinal member axis extends perpendicular to the intersection line.
15. Edge protector according to any one of the preceding clauses and in combination with clause 3, wherein the inner space of the receiving member has a length when measured along the longitudinal member axis, the entry opening has a width and a height when measured perpendicular to the longitudinal member axis of the receiving member and each of said width and height is at least three times smaller than the length of the inner space.
16. Edge protector according to any one of the preceding clauses and in combination with clause 9, wherein the first body section extends from the intermediate section until a first section end, and the entry opening is located near or at the first section end.
17. Edge protector according to any one of the preceding clauses, wherein the first contact surface and the second contact surface are flat surfaces.
18. Edge protector according to any one of the preceding clauses, wherein the first contact surface and second contact surface extend under an angle of about 90° relative to each other.
19. Edge protector according to any one of the preceding clauses, wherein a holder member is provided on the receiving member.
20. Edge protector according to clause 19, wherein the holder member has an elongate form extending along a longitudinal holder axis.
21. Edge protector according to clause 19 or 20, wherein the holder member is configured to be positioned in a further receiving member of a further edge protector stacked on the edge protector.
22. Edge protector according to any one of the clauses 19-21, wherein the holder member is configured to be positioned in a further receiving member of a further edge protector stacked on the edge protector such that a further first contact surface of the further edge protector extends parallel to the first contact surface of the edge protector and a further second contact surface of the further edge protector extends parallel to the second contact surface of the edge protector.
23. Edge protector according to any one of the clauses 19-22, wherein;
   - the holder member comprises a first holder end which is connected to the receiving member and a holder body extending along the longitudinal holder axis from the first holder end until it ends at a second holder end,
   - the elongate holder body and second holder end are not connected to the receiving member, and
   - the first holder end is located at a larger distance from the second body section than the second holder end.
24. Edge protector according to any one of the clauses 19-23, wherein the longitudinal holder axis of the holder member extends in substantially the same direction as the longitudinal member axis of the receiving member.
25. Edge protector according to any one of the preceding clauses, wherein the first body section and the second body section are interconnected via an intermediate section, and the intermediate section comprises a hinge to pivot the first body section and the second body section relative to each other.
26. Edge protector according to clause 25, wherein the hinge is configured to allow adjustment of the angle α between the first contact surface and the second contact surface.
27. Edge protector according to clause 25 or 26, wherein the hinge is configured to allow adjustment of the angle α between the first contact surface and the second contact surface within a range of 90° - 180°.
28. Edge protector according to clause 27, wherein the hinge comprises blocking means to block adjustment of the angle α between the first contact surface and the second contact surface beyond the range of 90° - 180°.
29. Edge protector according to any of the clauses 25-28, wherein the hinge comprises a pivot axis extending substantially parallel to the first contact surface and the second contact surface.
30. Kit of parts comprising an edge protector according to any one of the preceding clauses and a positioning unit comprising an elongate stick with a positioning member located at a stick end of the stick, which positioning member fits in the receiving member of the edge protector.
31. Kit of parts according to clause 30, wherein the positioning unit is constructed to lift the edge protector when the positioning member is located in the receiving member of the edge protector.
32. Kit of parts according to clause 30 or 31, wherein the positioning member has an elongate form.
33. Kit of parts according to any one of the clauses 30-32, wherein the positioning member is connected to the stick by a pivot connector to position the positioning member in different orientations relative to the stick.
34. Assembly of an edge protector according to any one of the clauses 19-24 and a further edge protector according to any one of the clauses 19-24, wherein the further edge protector is stacked on the edge protector, and the holder member of the edge protector is positioned in the further receiving member of the further edge protector.
35. Assembly according to clause 34, wherein the further first contact surface of the further edge protector extends parallel to the first contact surface of the edge protector, and the further second contact surface of the further edge protector extends parallel to the second contact surface of the edge protector.
36. Method for securing a cargo with an elongate flexible fastener, such as a belt, and a kit of parts according to any one of the clauses 30-33, said method comprising the steps of:
   - positioning the positioning member of the positioning unit in the receiving member of the edge protector,
   - lifting the edge protector with the positioning unit to a top side of the cargo,
   - placing the edge protector between the flexible fastener and the cargo, such that the first contact surface is in contact with the cargo and the second contact surface is in contact with the top side of the cargo, and
   - removing the positioning member out of the receiving member, lowering the positioning member and fastening the flexible fastener to secure the cargo, while the edge protector remains positioned between the flexible fastener and the cargo.
37. Method for unfasten a cargo secured with an elongate flexible fastener, such as a belt, and a kit of parts according to any one of the clauses 30-33, said method comprising the steps of:
   - unfastening the flexible fastener which secures the cargo,
   - positioning the positioning member of the positioning unit in the receiving member of the edge protector, and
   - lowering the edge protector with the positioning unit from the top side of the cargo.
38. Method for stacking an edge protector according to any one of the clauses 19-24 and a further edge protector according to any one of the clauses 19-24, said method comprises positioning the further edge protector on the edge protector such that the holder member of the edge protector is positioned in the further receiving member of the further edge protector.
39. Method according to clause 38, wherein the method comprises positioning the further edge protector on the edge protector such that the further first contact surface of the further edge protector extends parallel to the first contact surface of the edge protector, and the further second contact surface of the further edge protector extends parallel to the second contact surface of the edge protector.

As required, detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. Further, the terms and phrases used herein are not intended to be limiting, but rather, to provide an understandable description of the invention.

The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language, not excluding other elements or steps). Any reference signs in the claims should not be construed as limiting the scope of the claims or the invention.

The mere fact that certain measures are recited in mutually different dependent claims does not indicate that a combination of these measures cannot be used to advantage.

It will be apparent to those skilled in the art that various modifications can be made to the device and method without departing from the scope as defined in the claims.

## Claims

1. Edge protector for protecting an edge of a cargo secured by an elongate flexible fastener, such as a belt, which edge protector comprises;
- a body made of a stiff material, which body comprises a first body section with a first contact surface to be placed in contact with the cargo, and a second body section with a second contact surface to be placed in contact with the cargo, wherein the second contact surface extends transverse relative to the first contact surface, and
- a receiving member provided on the first body section and configured to in use receive a positioning member of a positioning unit.

2. Edge protector according to claim 1, wherein the receiving member is configured to allow a lifting of the edge protector with the positioning unit.

3. Edge protector according to claim 1 or 2, wherein the receiving member comprises side walls surrounding a longitudinal member axis to form an inner space extending along the longitudinal member axis.

4. Edge protector according to claim 3, wherein the side walls are configured to allow a lifting of the edge protector by applying a force on the side walls in the inner space with the positioning member.

5. Edge protector according to any one of the preceding claims, wherein the edge protector comprises an inner side and an outer side, the first contact surface and the second contact surface are located at the inner side, and the receiving member is located at the outer side.

6. Edge protector according to any one of the preceding claims, wherein the first contact surface and second contact surface extend under an angle of about 90° relative to each other.

7. Edge protector according to any one of the preceding claims, wherein a holder member is provided on the receiving member.

8. Edge protector according to any of the claims 1-5, 7, wherein the first body section and the second body section are interconnected via an intermediate section and the intermediate section comprises a hinge to pivot the first body section and the second body section relative to each other.

9. Edge protector according to claim 8, wherein the hinge is configured to allow adjustment of the angle α between the first contact surface and the second contact surface.

10. Kit of parts comprising an edge protector according to any one of the preceding claims and a positioning unit comprising an elongate stick with a positioning member located at a stick end of the stick, which positioning member fits in the receiving member of the edge protector.

11. Kit of parts according to claim 10, wherein the positioning unit is constructed to lift the edge protector when the positioning member is located in the receiving member of the edge protector.

12. Assembly of an edge protector according to claim 7 and a further edge protector according to claim 7, wherein the further edge protector is stacked on the edge protector, and the holder member of the edge protector is positioned in the further receiving member of the further edge protector.

13. Method for securing a cargo with an elongate flexible fastener, such as a belt, and a kit of parts according to claim 10 or 11, said method comprising the steps of:
- positioning the positioning member of the positioning unit in the receiving member of the edge protector,
- lifting the edge protector with the positioning unit to a top side of the cargo,
- placing the edge protector between the flexible fastener and the cargo, such that the first contact surface is in contact with the cargo and the second contact surface is in contact with the top side of the cargo, and
- removing the positioning member out of the receiving member, lowering the positioning member and fastening the flexible fastener to secure the cargo, while the edge protector remains positioned between the flexible fastener and the cargo.

14. Method for unfasten a cargo secured with an elongate flexible fastener, such as a belt, and a kit of parts according to claim 10 or 11, said method comprising the steps of:
- unfastening the flexible fastener which secures the cargo,
- positioning the positioning member of the positioning unit in the receiving member of the edge protector, and
- lowering the edge protector with the positioning unit from the top side of the cargo.

15. Method for stacking an edge protector according to claim 7 and a further edge protector according to claim 7, said method comprises positioning the further edge protector on the edge protector such that the holder member of the edge protector is positioned in the further receiving member of the further edge protector.
